# EUROPÄISCHE PATENTSCHRIFT

(11) **EP 1 719 578 B1**
(45) Veröffentlichungstag und Bekanntmachung des Hinweises auf die Patenterteilung: **06.08.2008**
(21) Anmeldenummer: 06008876.2
(22) Anmeldetag: 28.04.2006
(51) Int. Cl.: B23Q 11/00, B23B 29/24

(54) **Werkzeugrevolver**
Tool turret
Porte-outil de tourelle

(30) Priorität: 06.05.2005 DE 102005021112
(43) Veröffentlichungstag der Anmeldung: 08.11.2006
(73) Patentinhaber: Sauter Feinmechanik GmbH, D-72555 Metzingen (DE)
(72) Erfinder: Sahm, Detlef, Dr., 73669 Lichtenwald (DE); Förster, Thomas, 72585 Riederich (DE); Katzenmayer, Roland, 72555 Metzingen (DE)
(74) Vertreter: Bartels, Martin Erich Arthur

(56) Entgegenhaltungen:
- EP-A- 0 570 095
- EP-B1- 0 461 357
- JP-A- 4 152 006
- PATENT ABSTRACTS OF JAPAN Bd. 015, Nr. 447 (M-1179), 14. November 1991 (1991-11-14) & JP 03 190608 A (NISSAN MOTOR CO LTD), 20. August 1991 (1991-08-20)

## Beschreibung

Die Erfindung bezieht sich auf einen Werkzeugrevolver mit einem Gehäuse und einer Aufnahmen für Werkzeuge aufweisenden Werkzeugscheibe, die am Gehäuse drehbar gelagert, relativ zu diesem in wählbare Winkelstellungen einstellbar ist und einen Innenraum aufweist, der eine Antriebseinrichtung enthält, mittels deren das Werkzeug antreibbar ist, das sich in einer in Arbeitsstellung befindlichen Aufnahme befindet.

Werkzeugrevolver dieser Art sind bekannt. Ein derartiger Werkzeugrevolver, dessen Gehäuse mit einer Werkzeugmaschine verbindbar ist, ist beispielsweise in der EP 0 461 357 B1 offenbart.

Bei der Benutzung solcher Werkzeugrevolver handelt es sich bei den in den Aufnahmen der Werkzeugscheibe befindlichen Werkzeugen, die zum Einsatz kommen sollen, hauptsächlich um Werkzeuge zur spanabhebenden Bearbeitung, wie Bohr- oder Fräswerkzeuge. Vielfach kommen bei derartigen Bearbeitungsvorgängen Hilfsmedien in Form von Fluiden zur Anwendung, etwa Wasser für Kühl- und/oder Reinigungszwecke oder Wasser/Öl-Emulsionen, beispielsweise als Kühl-Schmiermittel. Unter diesen Einsatzbedingungen besteht die Gefahr, dass Wasser oder andere Fluide in den Innenraum der Werkzeugscheibe gelangen und sich gegebenenfalls darin ansammeln. Versuche, diesbezüglich Abhilfe zu schaffen, indem Maßnahmen vorgesehen werden, um einen Eintritt von Fluiden zu vermeiden, haben zu keiner zufriedenstellenden Lösung geführt. Mechanische Dichtungsanordnungen zur Abdichtung des Innenraumes der Werkzeugscheibe sind baulich aufwendig und nicht betriebssicher. Wird ein permanenter Überdruck im Innenraum der Werkzeugscheibe erzeugt und während des Betriebes aufrecht erhalten, ergibt sich ein hoher Energieverbrauch.

Durch die JP-A-03190608 ist ein gattungsgemäßer Werkzeugrevolver mit einem Gehäuse und eine Aufnahme für Werkzeuge aufweisenden Werkzeugscheibe bekannt, die am Gehäuse drehbar gelagert relativ zu diesem in wählbare Winkelstellungen einstellbar ist und einen Innenraum aufweist, der eine Antriebseinrichtung enthält, mittels deren das Werkzeug antreibbar ist, das sich in einer in Arbeitsstellung befindlichen Aufnahme befindet. Bei der bekannten Lösung wird zum Abhalten eines ungewollten Kühlschmiermitteleintritts ins Innere der Werkzeugscheibe vorgesehen, mittels Druckluft den Innenraum der Werkzeugscheibe zu versorgen, wobei eine Kompressoreinheit zum Zuführen der Druckluft derart in dem genannten Innenraum einen Überdruck aufbaut, dass über Spaltdurchgänge zwischen der Werkzeugscheibe und deren Antrieb Druckluft in die Umgebung ausströmt. Aufgrund der permanenten Druckluftversorgung ist die bekannte Lösung aufwendig in der Realisierung und im Betrieb.

Ausgehend von diesem Stand der Technik stellt sich die Erfindung die Aufgabe, einen Werkzeugrevolver zur Verfügung zu stellen, der, ohne dass aufwendige Maßnahmen zur Verhinderung eines Fluideintritts getroffen werden müßten, auch an Einsatzorten betriebssicher benutzbar ist, an denen mit dem Vorhandensein von dahingehenden Fluiden zu rechnen ist.

Erfindungsgemäß ist diese Aufgabe durch einen Werkzeugrevolver gelöst, der die Merkmale des Patentanspruches 1 in seiner Gesamtheit aufweist. Zweckmäßige Weiterbildungen enthalten die Unteransprüche 2 bis 12.

Dadurch, dass erfindungsgemäß im Innenraum der Werkzeugscheibe ein das Vorhandensein eines Fluids signalisierender Sensor vorhanden ist, ist der Werkzeugrevolver an Orten, an denen mit einer Fluidbelastung zu rechnen ist, problemlos einsetzbar, ohne dass ein entsprechender Aufwand für Maßnahmen erforderlich ist, mit denen versucht wird, den Fluideintritt zu verhindern. Ohne dass ein ins Gewicht fallender baulicher Aufwand betrieben werden müßte, kann die Drainageeinrichtung durch eine oder mehrere, bedarfsweise öffenbare Durchgangsöffnungen gebildet sein, die aus dem Innenraum ins Freie führen. Das Öffnen oder Schließen kann in Abhängigkeit von einem Signal eines im Innenraum befindlichen Sensors erfolgen, bei dem es sich beispielsweise um einen handelsüblichen Flüssigkeitssensor, wie er bei anderen Anwendungen beispielsweise als Füllstandszeiger in Gebrauch ist, handeln kann. Bei einer bevorzugten Ausführungsform ist zusätzlich zu dem ein Fluid signalisierenden Sensor eine einen Abfluss von Fluiden aus dem Innenraum ermöglichende Drainageeinrichtung vorhanden.

Die Sensoreinrichtung (Flüssigkeitssensor) kann ohne Vorhandensein der Drainageeinrichtung dergestalt funktionieren, dass sie bei Detektierung eines fluidischen Mediums in vorgebbarer Volumenmenge ein Signal an eine Steuereinrichtung weitergibt, die als Bestandteil der Werkzeugmaschine dieselbe abschaltet und ein Beseitigen oder Abreinigen des fluidischen Mediums aus dem Innenraum für eine Maschinenbedienperson ermöglicht, indem diese beispielsweise durch Entfernen eines scheibenförmigen Abschlusses des Werkzeugrevolvers diesen Innenraum von außen her zugänglich macht. Nach dem Entfernen des Mediums und Anbringen des Abschlusses kann dann die Werkzeugmaschine erneut in Betrieb genommen werden.

Ferner kann es auch vorgesehen sein, innerhalb der Werkzeugscheibe umfangsseitig mindestens eine Durchgangsöffnung anzubringen, die dergestalt den Drainagevorgang ermöglicht. Sofern die jeweilige Durchgangsöffnung darüber hinaus mit einer Drosselstelle oder einer Blende versehen ist, läßt sich dergestalt Schmutz und Feuchtigkeit von der Umgebung her stammend abhalten, in das Innere der Werkzeugscheibe einzudringen. Vorteilhafterweise ist dabei vorgesehen, dass eine Überdruckeinrichtung in den Innenraum der Werkzeugscheibe unter Überdruck ein Medium, beispielsweise in Form von Preßluft od. dgl., einbläst, um dergestalt die Medienbefreiung vorzunehmen. Gegenüber der Permanentversorgung mit Überdruck hätte dies den Vorteil, dass nur von Zeit zu Zeit oder durch den Sensor angesteuert eine Abreinigung über die Drucklufteinrichtung veranlaßt wird.

Bei Ausführungsbeispielen, bei denen die Werkzeugscheibe einen den Innenraum abschließenden Verschlußdeckel aufweist, ist dieser vorzugsweise mit der Drainageeinrichtung versehen. Bei solchen Ausführungsbeispielen besteht die Möglichkeit, konstruktiv gleichartige Werkzeugscheiben wahlweise mit Verschlußdeckeln, die die Drainageeinrichtung beinhalten, auszurüsten oder mit Verschlußdeckeln ohne Drainageeinrichtung, falls der betreffende Werkzeugrevolver für den Einsatz in trockener Umgebung und für Bearbeitungsvorgänge ohne Hilfsfluide vorgesehen ist, was eine rationelle Fertigung des Werkzeugrevolvers begünstigt.

Vorzugsweise ist die Werkzeugscheibe für die Einstellung der Werkzeugaufnahmen in die jeweilige Arbeitsstellung um eine Drehachse drehbar, die gegenüber der Vertikalen abweicht, vorzugsweise horizontal verläuft, so dass sich in den Innenraum eingetretenes Fluid an der die Drehachse umgebenden Wand des Innenraumes ansammelt, und zwar an dem Wandabschnitt, der bei der Drehung der Werkzeugscheibe die jeweils tiefstgelegene Stelle des Innenraumes bildet. Um ein so angesammeltes Fluid abzuführen, kann die Drainageeinrichtung am Verschlußdeckel an einer zu dieser Wand des Innenraumes benachbarten Stelle vorgesehen sein.

Bei vorteilhaften Ausführungsformen ist die die Drehachse umgebende Wand des Innenraumes zur Drehachse konzentrisch, wobei der Verschlußdeckel eine diese Wand übergreifende, kreisrunde Verschlußscheibe ist.

Wenn hierbei die Verschlußscheibe an ihrem umfänglichen Randbereich mehrere, in Winkelabständen voneinander angeordnete Drainageeinrichtungen aufweist, ermöglicht die Drehbewegung der Werkzeugscheibe, dass betreffende Drainageeinrichtungen in den Bereich der jeweils tiefgelegenen Stelle des Innenraumes gelangen.

Bei einer besonders einfachen Bauweise der Drainageeinrichtung weist diese ein zwischen Sperrzustand und Freigabezustand umsteuerbares Ventil auf. Wie bereits angedeutet, kann die Steuerung in Abhängigkeit von einem Signal eines im Innenraum befindlichen Sensors erfolgen oder in Abhängigkeit von Betriebs- oder Einsatzbedingungen.

Die Anordnung kann so getroffen sein, dass die Ventile der Drainageeinrichtung in Durchgangsöffnungen der Verschlußscheibe aufgenommen und in den die jeweilige Durchgangsöffnung normalerweise schließenden Sperrzustand vorgespannt sind, wobei eine Steuereinrichtung vorhanden ist, um in Abhängigkeit von der Drehstellung der Werkzeugscheibe ausgewählte Ventile in den Freigabezustand umzusteuern, d.h. zumindest das der jeweils tiefstgelegenen Stelle des Innenraumes zugeordnete Ventil.

Die Ventile können einen durch Federkraft gegen einen Ventilsitz vorgespannten Schließkörper aufweisen, der beim Sperrzustand über die Innenseite der Verschlußscheibe hinaus in den Innenraum vorsteht. Bei solchen Ausführungsbeispielen eröffnet sich die Möglichkeit, die Steuereinrichtung besonders einfach auszubilden, indem sie einen im Innenraum der Werkzeugscheibe relativ zum Gehäuse stationär angeordneten Steuernocken aufweist, an dem bei der Drehbewegung der Werkzeugscheibe der Schließkörper des jeweils zu öffnenden Ventils anläuft und dadurch vom Ventilsitz abgehoben wird.

Um das Abfließen von Fluid zu begünstigen, ist es vorteilhaft, nicht nur das jeweils der tiefgelegenen Stelle des Innenraumes zugeordnete Ventil zu öffnen, sondern gleichzeitig ein demgegenüber höher gelegenes Ventil, über das der oberhalb des Fluidpegels befindliche Bereich des Innenraumes belüftet wird, so dass das Fluid an der tiefgelegenen Stelle durch Schwerkrafteinfluß ungehindert austritt. Im Hinblick hierauf ist bei einem besonders vorteilhaften Ausführungsbeispiel vorgesehen, dass der Steuernocken durch eine sich längs eines Abschnittes des die Ventile aufweisenden Umfangsbereiches der Verschlußscheibe erstreckende Nockenleiste gebildet ist, wobei die Länge dieses Abschnittes so gewählt ist, dass durch die Nockenleiste gleichzeitig ein am tiefgelegenen Bereich des Innenraumes befindliches Ventil und zumindest ein gegenüber diesem Bereich höher gelegenes Ventil geöffnet wird.

Nachstehend ist die Erfindung anhand der Zeichnung im einzelnen erläutert. Es zeigen:
- Fig.1: eine stark schematisch vereinfacht und perspektivisch gezeichnete Schrägansicht eines Ausführungsbeispiels des erfindungsgemäßen Werkzeugrevolvers, wobei eine den Innenraum der Werkzeugscheibe frontseitig abschließende Verschlußscheibe teilweise ausgeschnitten ist, so dass der Innenraum teilweise sichtbar ist, und wobei eine im Innenraum befindliche Steuereinrichtung zur Betätigung der Drainageeinrichtungen der Übersichtlichkeit halber weggelassen ist;
- Fig.2: eine stark schematisch vereinfachte Vorderansicht der Werkzeugscheibe, wobei deren Verschlußscheibe ebenfalls teilweise ausgeschnitten ist und eine im Innenraum der Werkzeugscheibe vorgesehene Steuereinrichtung der Drainageeinrichtung sichtbar ist, und
- Fig.3: einen gegenüber den Fig.1 und 2 stark vergrößert und schematisch vereinfacht gezeichneten Teilschnitts lediglich eines Umfangsabschnittes der Verschlußscheibe und eines angrenzenden Teiles der Werkzeugscheibe zusammen mit einer geänderten Ausführung der Drainageeinrichtung.

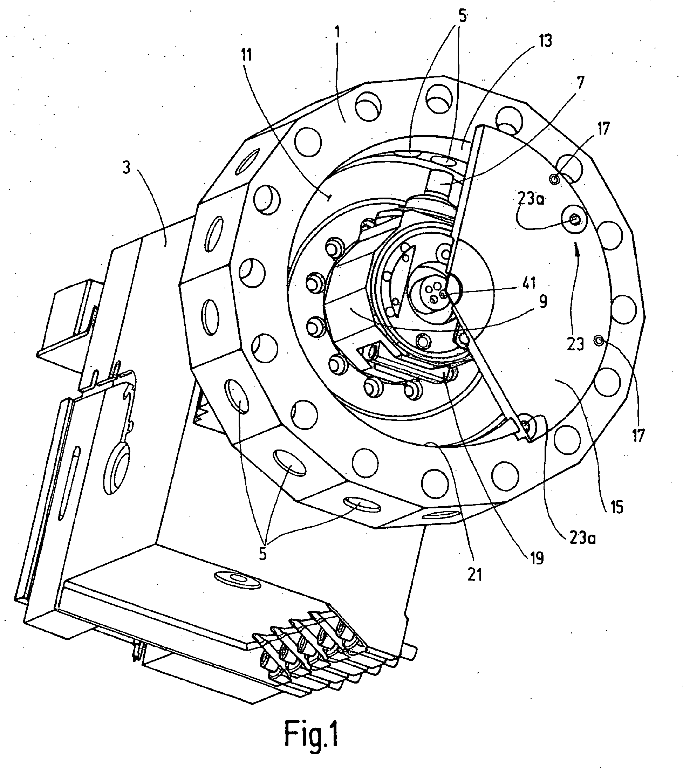

Die Fig.1 zeigt einen Werkzeugrevolver mit einer Werkzeugscheibe 1, die um eine Revolverachse drehbar an einem Gehäuse 3 gelagert ist, das in der in der einschlägigen Technik üblichen Weise Teil einer Werkzeugmaschine (nicht gezeigt) ist oder mit einer solchen verbindbar ist. Die Revolverachse ist beim vorliegenden Beispiel horizontal gerichtet. Die Werkzeugscheibe 1 weist in der bei Werkzeugrevolvern üblichen Weise einen Kranz von Werkzeugaufnahmen 5 (nicht sämtliche beziffert) auf, von denen durch Drehung der Werkzeugscheibe 1 um die Revolverachse jeweils eine gewünschte Aufnahme 5 in die Arbeitsstellung einstellbar ist, in der ein in dieser Aufnahme 5 befindliches Werkzeug mit einem Kupplungsteil 7 kuppelbar ist, das zu einer Antriebseinrichtung 9 gehört. Die Antriebseinrichtung 9 ist mit dem Gehäuse 3 verbunden und erstreckt sich von diesem, bezüglich der Revolverachse zentral gelegen, in den Innenraum 11 der Werkzeugscheibe 1 hinein. Dieser Innenraum 11 ist durch eine zur Revolverachse konzentrische Wand 13 in radialer Richtung begrenzt. Als stirnseitiger Abschluß des Innenraumes 11 weist die Werkzeugscheibe 1 einen Deckel in Form einer kreisrunden Verschlußscheibe 15 auf, die mittels Schrauben 17 an der Werkzeugscheibe 1 befestigt ist und den Rand der Wand 13 des Innenraumes 11 übergreift. Bei der Darstellung von Fig.1 ist die Verschlußscheibe 15 so ausgeschnitten, dass ein Großteil des Innenraumes 11 sichtbar ist.

An der Unterseite der im Innenraum 11 zentral gelegenen Antriebseinrichtung 9 befindet sich eine Sensoreinrichtung 19, bei der es sich beim vorliegenden Beispiel um einen handelsüblichen Flüssigkeitssensor handelt. Dieser erzeugt ein Signal, wenn sich im Innenraum 11 ein Fluid, beispielsweise Wasser, oberhalb einer tiefgelegenen Stelle 21 des Innenraumes 11 angesammelt und eine Pegelhöhe erreicht hat, die Anlaß gibt, eine Drainage des Innenraumes 11 vorzunehmen.

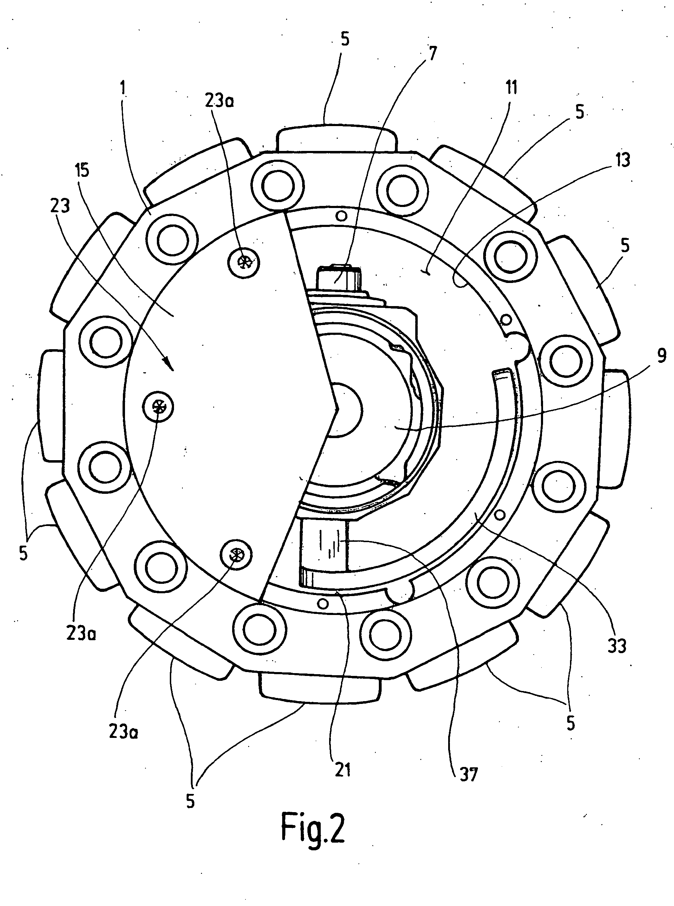

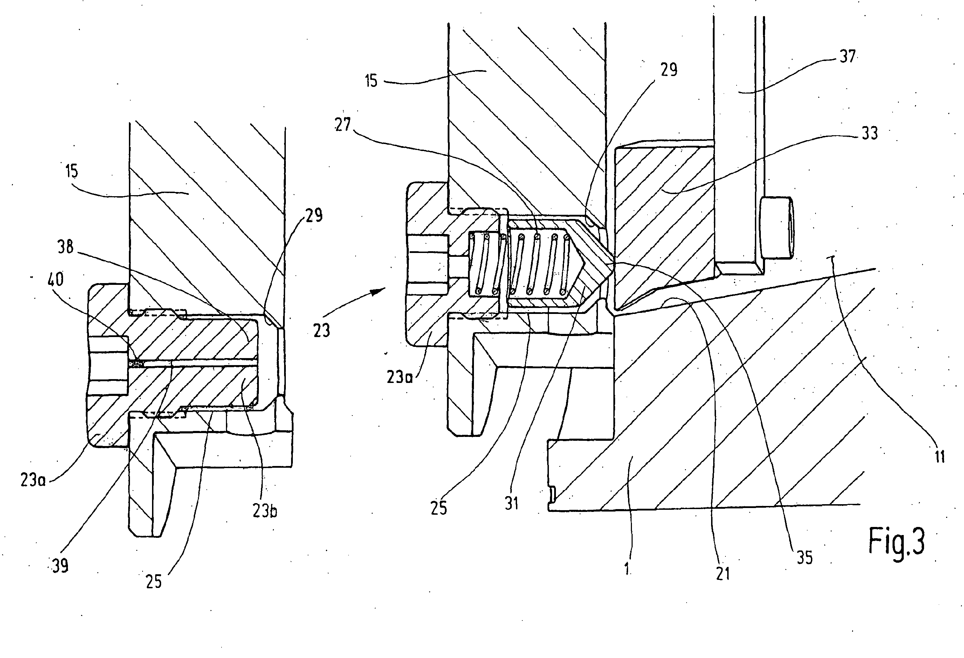

Nähere Einzelheiten einer Drainageeinrichtung, die Ventile 23a aufweist, werden anhand der Fig.2 und 3 erläutert. Beim vorliegenden Beispiel ist eine Mehrzahl von Ventilen 23 vorgesehen, vorzugsweise sechs oder acht Ventile 23a, die, wie insbesondere aus Fig.2 zu ersehen ist, an der Verschlußscheibe 15 in der Nähe von deren Umfangsrand so gelegen sind, dass die Ventile 23a bei der Drehung der Werkzeugscheibe 1 um die Revolverachse an die tiefgelegene Stelle 21 des Innenraumes gelangen, wobei das betreffende Ventil 23a jeweils der Wand 13 des Innenraumes 11 benachbart ist. Diese Stelle 21 bildet den Grund der Fluidansammlung im Innenraum 11.

Wie aus Fig.3 entnehmbar ist, sitzen die Ventile 23a in Durchgangsöffnungen 25 der Verschlußscheibe 15 und weisen einen durch eine Druckfeder 27 gegen einen Ventilsitz 29 vorgespannten Schließkörper 31 auf.

Bei dem in Fig.3 gezeigten Zustand, nämlich dem Freigabezustand des Ventils 23a, ist der Schließkörper 31 gegen die Federkraft vom Ventilsitz 29 abgehoben, so dass an der Stelle 21 des Innenraumes 11 angesammeltes Fluid durch das Ventil 23a seitlich in radialer Richtung abfließen kann. Das Abheben des Schließkörpers 31 vom Ventilsitz 29 ist durch eine im Innenraum 11 stationär angeordnete Nockenleiste 33 bewirkt, an der das Ventil 23a mit dem in den Innenraum 11 hinein vorstehenden Ende 35 des Schließkörpers 31 angelaufen ist.

Fig.2 zeigt, dass die über ein Verbindungsteil 37 an der Getriebeeinrichtung 9 befestigte Nockenleiste 33 sich längs der Bewegungsbahn, welche die Ventile 23a bei der Drehbewegung der Werkzeugscheibe 1 durchlaufen, über einen Längenabschnitt erstreckt, der beim vorliegenden Beispiel näherungsweise einen Winkelbereich von 90° umfaßt, so das durch Anlaufen des Schließkörpers 31 an der Nockenleiste 33 nicht nur das jeweils an der tiefgelegenen Stelle 21 befindliche Ventil 23a geöffnet wird, sondern auch ein demgegenüber höher gelegenes Ventil 23a, so dass das weiter oben gelegene Ventil 23a als Belüftungseinrichtung wirkt, um den Austritt von Fluid durch Schwerkraftwirkung aus dem geöffneten, unteren Ventil 23a zu begünstigen.

Wie bereits erwähnt, kann bei Ausführungsbeispielen, bei denen ein Sensor 19 eine entsprechende Fluidmenge im Innenraum 11 signalisiert, ein Drainagevorgang eingeleitet werden, indem die Werkzeugscheibe 1 so gedreht wird, dass eine entsprechende Lagebeziehung von Ventilen 23a zur Nokkenleiste 33 gegeben ist. Alternativ, ohne Verwendung eines Sensors 19, kann, wie ebenfalls oben erwähnt, ein Drainagevorgang in Abhängigkeit von der Betriebsweise oder anderen Parametern, wie der Drehwinkellage der Werkzeugscheibe 1, eingeleitet werden.

Bei einer geänderten Ausführungsform, wie sie in Blickrichtung auf die Fig.3 links unten dargestellt ist, wird das Ventil 23a in der Durchgangsöffnung 25 ersetzt durch einen Verschlußstopfen 38 in der Art einer Eindrehschraube, wobei die Durchgangsöffnung 25 über einen Mittenkanal 39 weitergeführt ist, der nach beiden Seiten hin aus dem Verschlußstopfen 38 ausmündet. Im Übergangsbereich des Kanals 39 zu dem Schraubenkopf des Verschlußstopfens 38 ist eine Drosselstelle oder Blende 40 vorgesehen, die den freien Durchmesser des Mittenkanals 39 reduziert. Auf diese Art und Weise wird das ungewollte Eindringen von Verschmutzungen, gegebenenfalls zusammen mit Fluid, aus der Umgebung in das Innere 11 der Werkzeugscheibe 1 vermieden. Wird vorzugsweise über eine Belüftungszufuhr 41 (vgl. Fig.1) Druckluft dem Innenraum 11 zugeführt, läßt sich dergestalt über den Mittenkanal 39 eines jeden Verschlußstopfens 38 der Innenraum 11 leerblasen, vorzugsweise im Bereich einer tief gelegenen Stelle.

Ein dahingehender Leer- oder Ausblasvorgang kann auch immer dann stattfinden, wenn der Fluidsensor 19 hierfür die Notwendigkeit vorgibt. Auf diese Art und Weise braucht nur von Zeit zu Zeit ein Überdruck im Innenraum 11 aufgebaut zu werden, was Energiekosten einsparen hilft. Auch wäre es in speziellen Fällen denkbar, über die Belüftungszufuhr 41 oder eine vergleichbare Zufuhröffnung ein Spül- oder Reinigungsmedium einzubringen. Der Verschlußstopfen 38 mit Mittenkanal 39 bildet insoweit eine weitere Art 23b einer Drainageeinrichtung 23 aus, die modular aufgebaut das Einwechseln gegenüber den angesprochenen Ventilen 23a zuläßt. Auch besteht gegebenenfalls die Möglichkeit, bei einer Werkzeugscheibe neben den Ventilen 23a auch die weitere Art 23b einer Drainageeinrichtung mit Drosselstelle zum Einsatz zu bringen.

## Patentansprüche

1. Werkzeugrevolver mit einem Gehäuse (3) und einer Aufnahmen (5) für Werkzeuge aufweisenden Werkzeugscheibe (1), die am Gehäuse (3) drehbar gelagert, relativ zu diesem in wählbare Winkelstellungen einstellbar ist und einen Innenraum (11) aufweist, der eine Antriebseinrichtung (9) enthält, mittels deren das Werkzeug antreibbar ist, das sich in einer in Arbeitsstellung befindlichen Aufnahme (5) befindet, **dadurch gekennzeichnet, dass** ein das Vorhandensein eines Fluides im Innenraum (11) der Werkzeugscheibe (1) signalisierender Sensor (19) vorhanden ist.

2. Werkzeugrevolver nach Anspruch 1, **dadurch gekennzeichnet, dass** zusätzlich eine einen Abfluss von Fluiden aus dem Innenraum (11) ermöglichende Drainageeinrichtung (23) vorhanden ist.

3. Werkzeugrevolver nach Anspruch 2, **dadurch gekennzeichnet, dass** die Drainageeinrichtung (23) mindestens eine Durchgangsöffnung (25) aufweist, die vorzugsweise mit einer Drosselstelle (40) versehen und/oder die mittels eines Ventils (23a) verschließbar ist.

4. Werkzeugrevolver nach Anspruch 2 oder 3, **dadurch gekennzeichnet, dass** die Drainageeinrichtung (23) an der Werkzeugscheibe (1) und/oder an einem Verschlußdeckel (13) angeordnet ist, mit dem der Innenraum (11) der Werkzeugscheibe (1) abschließbar ist.

5. Werkzeugrevolver nach Anspruch 4, **dadurch gekennzeichnet, dass** die Werkzeugscheibe (1) für die Einstellung der Werkzeugaufnahme (5) in die Arbeitsstellung um eine Drehachse drehbar ist, dass die auf die Drehachse bezogene radiale Erstreckung des Innenraumes (11) durch eine die Drehachse umgebende Wand (13) begrenzt ist, so dass bei der Drehung der Werkzeugscheibe (1) jeweils unterschiedliche Abschnitte dieser Wand (13) die tiefgelegene Stelle (21) des Innenraumes (11) bilden, und dass die Drainageeinrichtung (23) an einer zu dieser Wand (13) des Innenraumes (11) benachbarten Stelle vorgesehen ist.

6. Werkzeugrevolver nach Anspruch 5, **dadurch gekennzeichnet, dass** die die Drehachse umgebende Wand (13) des Innenraumes (11) zur Drehachse konzentrisch ist und dass der Verschlußdeckel eine diese Wand (13) übergreifende kreisrunde Verschlußscheibe (15) ist.

7. Werkzeugrevolver nach Anspruch 6, **dadurch gekennzeichnet, dass** die Werkzeugscheibe (1) und/oder die Verschlußscheibe (15) an ihrem umfänglichen Randbereich mehrere, in Winkelabständen voneinander angeordnete Drainageeinrichtungen (23) aufweist, die bei der Drehbewegung der Werkzeugscheibe (1) jeweils in die der tiefgelegenen Stelle (21) des Innenraumes (11) entsprechende Position einstellbar sind.

8. Werkzeugrevolver nach einem der Ansprüche 3 bis 7, **dadurch gekennzeichnet, dass** jedes Ventil (23a) zwischen einem Sperrzustand und einem Freigabezustand umsteuerbar ist.

9. Werkzeugrevolver nach den Ansprüchen 3 und 8, **dadurch gekennzeichnet, dass** die Ventile (23a) in den Durchgangsöffnungen (25) der Verschlussscheibe (15) aufgenommen und in den die jeweilige Durchgangsöffnung (25) normalerweise schließenden Sperrzustand vorgespannt sind und dass eine Steuereinrichtung (33) vorhanden ist, um in Abhängigkeit von der Drehstellung der Werkzeugscheibe (1) ausgewählte Ventile (23a) in den Freigabezustand umzusteuern.

10. Werkzeugrevolver nach Anspruch 9, **dadurch gekennzeichnet, dass** die Ventile (23a) einen durch Federkraft gegen einen Ventilsitz (29) vorgespannten Schließkörper (31) aufweisen, der beim Sperrzustand über die innenseite der Verschlußscheibe (15) hinaus in den Innenraum (11) vorsteht, und dass die Steuereinrichtung einen im Innenraum (11) relativ zum. Gehäuse (3) stationär angeordneten Steuernocken (33) aufweist, an dem bei der Drehbewegung der Werkzeugscheibe (1) der Schließkörper (31) des jeweils zu öffnenden Ventils (23a) anläuft und **dadurch** vom Ventilsitz (29) abgehoben wird.

11. Werkzeugrevolver nach Anspruch 10, **dadurch gekennzeichnet, dass** der Steuernocken durch mindestens eine sich längs eines Abschnittes des die Ventile (23a) aufweisenden Umfangsbereiches der Verschlussscheibe (15) erstreckende Nockenleiste (33) gebildet ist und dass die Länge dieses Abschnittes so gewählt ist, dass durch die Nockenleiste (33) gleichzeitig ein am tiefgelegenen Bereich (21) des Innenraumes (11) befindliches Ventil (23a) und zumindest ein gegenüber diesem Bereich höher gelegenes Ventil (23a) geöffnet wird.

12. Werkzeugrevolver nach Anspruch 11, **dadurch gekennzeichnet, dass** die Nockenleiste (33) an der im Innenraum (11) befindlichen Antriebseinrichtung (9) verankert ist.

13. Werkzeugrevolver nach einem der Ansprüche 1 bis 12, **dadurch gekennzeichnet, dass** als Sensor ein an der Antriebseinrichtung (9) verankerter Fluidsensor (19) vorgesehen ist, der vorzugsweise als kapazitiver Sensor ausgebildet ist.

## Claims

1. Tooling revolver with a housing (3) and a tooling disc (1) comprising take-ups (5) for tools, rotatably affixed to the housing (3), adjustable relative to the same in selectable angle positions and comprising an internal chamber (11) containing a drive means (9), with which the tool located in a take-up (5) in a working position can be driven, **characterised in that** a sensor (19) signalling the presence of a fluid in the interior chamber (11) of the tooling disc (1) is provided.

2. Tooling revolver according to Claim 1, **characterised in that** a drainage means (23) enabling a drainage of fluids from the interior chamber (11) is also provided.

3. Tooling revolver according to Claim 2, **characterised in that** the drainage means (23) comprises at least one through passage (25) which is preferably equipped with a throttle (40) and/or which can be closed by means of a valve (23 a).

4. Tooling revolver according to Claim 2 or 3, **characterised in that** the drainage means (23) is located on the tooling disc (1) and/or on a closing lid (13) with which the interior chamber (11) of the tooling disc (1) can be closed off.

5. Tooling revolver according to Claim 4, **characterised in that** the tooling disc (1) can be rotated around an axis of rotation into the working position for the adjustment of the take-up (5), **in that** the radial expansion of the internal chamber (11) in relation to the axis of rotation is delimited by means of a wall (13) surrounding the axis of rotation, so that different sections of this wall (13) form the lower point (21) of the interior chamber (11) when the tooling disc (1) is rotated, and **in that** the drainage means (23) is envisaged at a point adjacent to this wall (13) of the interior chamber (11).

6. Tooling revolver according to Claim 5, **characterised in that** the wall (13) of the interior chamber (11) surrounding the axis of rotation is concentric to the axis of rotation, and **in that** the closing lid is a circular closing disc (15) straddling this wall (13).

7. Tooling revolver according to Claim 6, **characterised in that** the tooling disc (1) and/or the closing disc (15) comprises several drainage means (23) positioned at angled distances from each other in its circumference edge area, the same being adjustable into the relevant lower point (21) position of the interior chamber (11) during the rotation movement of the tooling disc (1).

8. Tooling revolver according to one of the Claims 3 to 7, **characterised in that** each valve (23a) can be controlled between a blocked condition and a released condition.

9. Tooling revolver according to one of the Claims 3 and 8, **characterised in that** the valves (23a) are received in the through passages (25) of the closing disc (15) and are pre-tensioned in the normally closed blocked condition of the relevant through passage (25), and **in that** a control means (33) is provided for switching selected valves (23a) into the released condition depending on the rotation position of the tooling disc (1).

10. Tooling revolver according to Claim 9, **characterised in that** the valves (23a) comprise a closing body (31) that is pre-tensioned by means of spring force against a valve seat (29), the same projecting further than the inside of the closing disc (15) and into the interior chamber (11) in the blocked condition, and **in that** the control means comprises a control cam (33) located stationary in the interior chamber (11) relative to the housing (3), where the tooling disc (1) of the closing body (31) of the relevant valve (23a) to be opened is controlled and thus lifted from the valve seat (29) during a rotation movement.

11. Tooling revolver according to Claim 10, **characterised in that** the control cam is formed by at least one cam rail (33) extending along a section of the circumference area of the closing disc (15) comprising the valves (23a), and **in that** the length of this section is selected in such a way that the cam rail (33) simultaneously opens a valve (23a) located in the lower area (21) of the interior chamber (11) and at least one valve (23a) located in an area that is higher than the first area.

12. Tooling revolver according to Claim 11, **characterised in that** the cam rail (33) is anchored to the drive means (9) located in the interior chamber (11).

13. Tooling revolver according to one of the Claims 1 to 12, **characterised in that** a fluid sensor (19) anchored to the drive means (9) is envisaged as a sensor, which preferably takes the form of a capacitative sensor.

## Revendications

1. Tourelle d'outil comprenant un carter ( 3 ) et un disque ( 1 ) à outil qui a des logements ( 5 ) pour des outils, qui est monté tournant sur le carter ( 3 ), qui peut être réglé en des positions angulaires pouvant être choisies par rapport à celui-ci et qui a un espace ( 11 ) intérieur, qui comporte un dispositif ( 9 ) d'entraînement au moyen duquel peut être entraîné l'outil qui se trouve dans un logement ( 5 ) se trouvant en position de travail, **caractérisée en ce qu'**il y a un capteur ( 5 ) signalant la présence d'un fluide dans l'espace ( 11 ) intérieur du disque ( 1 ) à outil.

2. Tourelle d'outil suivant la revendication 1, **caractérisée en ce qu'**il y a, en outre, un dispositif ( 23 ) de purge permettant d'évacuer des fluides de l'espace ( 11 ) intérieur.

3. Tourelle d'outil suivant la revendication 2, **caractérisée en ce que** le dispositif ( 23 ) de purge a au moins une ouverture ( 25 ) de passage, qui est munie de préférence d'un point ( 40 ) d'étranglement et/ou qui peut être fermée au moyen d'une vanne ( 23a ).

4. Tourelle d'outil suivant la revendication 2 ou 3, **caractérisée en ce que** le dispositif (23) de purge est disposé sur le disque ( 1 ) à outil et/ou sur un couvercle ( 13 ) de fermeture, par lequel l'espace ( 11 ) intérieur du disque ( 1 ) à outil peut être fermé.

5. Tourelle d'outil suivant la revendication 4, **caractérisée en ce que** le disque ( 1 ) à outil peut, pour mettre le logement ( 5 ) d'outil en la position de travail, tourner autour d'un axe de rotation, **en ce que** l'étendue radiale, rapportée à l'axe de rotation, de l'espace ( 11 ) intérieur est délimitée par une paroi ( 13 ) entourant l'axe de rotation, de sorte que, lors de la rotation du disque ( 1 ) à outil, des parties différentes de cette paroi ( 13 ) forment le point ( 21 ) le plus bas de l'espace ( 11 ) intérieur, et **en ce que** le dispositif ( 23 ) de purge est prévu en un point voisin de cette paroi ( 13 ) de l'espace ( 11 ) intérieur.

6. Tourelle d'outil suivant la revendication 5, **caractérisée en ce que** la paroi ( 13 ), entourant l'axe de rotation, de l'espace ( 11 ) intérieur est concentrique à l'axe de rotation et **en ce que** le couvercle de fermeture est un disque ( 15 ) de fermeture circulaire enjambant cette paroi ( 13 ).

7. Tourelle d'outil suivant la revendication 6, **caractérisée en ce que** le disque ( 1 ) à outil et/ou le disque ( 15 ) de fermeture ont, sur leur partie marginale faisant le tour, plusieurs dispositifs ( 23 ) de purge disposés à des distances angulaires les uns des autres qui, lors du mouvement de rotation du disque ( 1 ) à outil, peuvent être mis respectivement dans la position correspondante du point (21) le plus bas de l'espace ( 11 ) intérieur.

8. Tourelle d'outil suivant l'une des revendications 3 à 7, **caractérisée en ce que** chaque vanne ( 23a ) peut être commutée en un état d'arrêt et en un état de dégagement.

9. Tourelle d'outil suivant l'une des revendications 3 à 8, **caractérisée en ce que** les vannes ( 23a ) sont reçues dans les ouvertures ( 25 ) de passage des disques ( 15 ) de fermeture et sont mises sous contrainte préalable dans l'état d'arrêt fermant normalement l'ouverture ( 25 ) de passage respective, et **en ce qu'**il y a un dispositif ( 33 ) de commande pour, en fonction de la position en rotation du disque ( 1 ) à outil, faire passer en la position de dégagement des vannes ( 23a ) sélectionnées.

10. Tourelle suivant la revendication 9, **caractérisée en ce que** les vannes ( 23a ) ont un obturateur ( 31 ) mis sous contrainte préalable sur un siège ( 29 ) de vanne par une force de ressort, obturateur qui, dans l'état d'arrêt, dépasse du côté intérieur du disque ( 15 ) de fermeture dans l'espace ( 11 ) intérieur, et **en ce que** le dispositif de commande a une canne ( 33 ) de commande disposée dans l'espace ( 11 ) intérieur de manière fixe par rapport au carter ( 3 ), sur laquelle l'obturateur ( 31 ) de la vanne ( 23a ) respectivement à ouvrir passe, lors du mouvement de rotation du disque ( 1 ) à outil, et est ainsi soulevé du siège ( 29 ) de vanne.

11. Tourelle suivant la revendication 10, **caractérisée en ce que** la canne de commande est formée par au moins une réglette ( 33 ) à came s'étendant le long d'un tronçon de la partie périphérique ayant la vanne ( 23a ) du disque ( 15 ) de fermeture, et **en ce que** la longueur de ce tronçon est choisie de façon à ce que, par la réglette ( 33 ) à came, soit ouvertes simultanément une vanne ( 23a ) se trouvant à la partie ( 21 ) la plus basse de l'espace ( 11 ) intérieur et en même temps une vanne ( 23a ) se trouvant plus haut que cette partie.

12. Tourelle suivant la revendication 11, **caractérisée en ce que** la réglette ( 33 ) à came est assujetties au dispositif ( 9 ) d'entraînement se trouvant dans l'espace ( 11 ) intérieur.

13. Tourelle suivant l'une des revendications 1 à 12, **caractérisée en ce qu'**il est prévu comme capteur un capteur ( 19 ) de fluide assujetti au dispositif ( 9 ) d'entraînement et constitué, de préférence, sous la forme d'un capteur capacitif.
